# EUROPEAN PATENT APPLICATION

(11) **EP 4 706 862 A1**
(43) Date of publication of application: **11.03.2026**
(21) Application number: 24810677.5
(22) Date of filing: 12.03.2024
(51) Int. Cl.: B23K 20/12

(54) **FRICTION STIR SPOT WELDING TOOL**

(30) Priority: 22.05.2023 JP 2023084103
(71) Applicant: KAWASAKI JUKOGYO KABUSHIKI KAISHA, Kobe-shi, Hyogo 650-8670 (JP)
(72) Inventor: HATANO, Ryoichi, Chuo-ku, Kobe-shi, Hyogo 650-8670 (JP); KAMIMUKI, Kenichi, Chuo-ku, Kobe-shi, Hyogo 650-8670 (JP); AKINO, Kazuki, Chuo-ku, Kobe-shi, Hyogo 650-8670 (JP)
(74) Representative: Müller-Boré & Partner Patentanwälte PartG mbB
(86) International application number: PCT/JP2024/009545
(87) International publication number: WO 2024/241669

(57) **Abstract**

A friction stir spot welding tool includes: a cylindrical pin that rotates about an axis; a shoulder having a hollow portion into which the pin is inserted; and a driving unit that performs driving of press-fitting the pin into a joining object while rotating the pin and driving of retracting the shoulder with respect to the joining object. A step-shaped portion forming a step in a rotation direction of the pin is provided on at least a part of a tip surface of the pin.

## Description

### Technical Field

The present disclosure relates to a friction stir spot welding tool including a pin and a shoulder.

### Background Art

As a method of overlapping and welding two or more members including a metal member, a fiber reinforced thermoplastic resin member, and the like, welding using friction stirring is known. For friction stir welding, a tool for friction stir spot welding including a pin and a shoulder having a hollow portion for accommodating the pin is sometimes used. For example, in a shoulder preceding process, while the shoulder is caused to project and press-fitted into an overlapping portion of a member to be joined, the pin is retracted to accommodate a material overflowing due to the press-fitting (for example, see Patent Literature 1). On the other hand, in a pin preceding process, while the pin is press-fitted into the overlapping portion, the shoulder is retracted.

In the pin preceding process described above, when a high joining pressure is required for friction stir spot welding of the overlapping portion, there is a problem of increase in size and cost of equipment including a welding tool. For example, in the case of joining an overlapping portion of a fiber reinforced thermoplastic resin member, a high pressing force is required for cutting contained continuous fibers. In this case, in order to reduce an amount of deflection due to a reaction force to the pressing force, it is necessary to employ large arms having high rigidity as arms to which the welding tool is attached.

### Citation List

### Patent Literature

Patent Literature 1: JP 2015-186869 A

### Summary of Invention

An object of the present disclosure is to reduce a joining pressure for an overlapping portion of a member to be joined in a friction stir spot welding tool employing a pin preceding process.

A friction stir spot welding tool according to one aspect of the present disclosure includes: a cylindrical pin that rotates about an axis; a shoulder having a hollow portion into which the pin is inserted; and a driving unit that performs driving of press-fitting the pin into a joining object while rotating the pin and driving of retracting the shoulder with respect to the joining object, in which a step-shaped portion forming a step in a rotation direction of the pin is provided on at least a part of a tip surface of the pin.

### Effect of the Invention

According to the present disclosure, it is possible to provide a friction stir spot welding tool employing a pin preceding process in which a joining pressure for an overlapping portion of a member to be joined can be reduced.

### Brief Description of Drawings

FIG. 1 is a schematic view showing a configuration of a friction stir spot welding device including a friction stir spot welding tool according to an embodiment of the present disclosure.
FIG. 2 is a view showing a configuration of a first member and a second member to be friction stir spot welded.
FIG. 3 is a view showing a welding procedure by a pin preceding process using a friction stir spot welding tool.
FIG. 4 is a perspective view and a side view illustrating shapes of a pin and a tip surface of the friction stir spot welding tool according to an example of the present disclosure together with a comparative example.
FIG. 5 is a graph showing a relationship between a press-fitting amount of a pin into a test piece and joining time in an example and a comparative example.
FIG. 6 is a graph illustrating a relationship between a press-fitting amount and joining time when a pin of the example is press-fitted into a test piece by changing a pressing force applied to the pin.
FIG. 7A is a diagram showing behavior of a stirred material in a shoulder preceding process, and FIG. 7B is a diagram showing behavior of a stirred material in the pin preceding process.
FIGS. 8A to 8C are perspective views showing another example of a pin tip shape of the friction stir spot welding tool.
FIGS. 9A to 9F are plan views illustrating a modification of a shape of a pin tip surface illustrated in FIG. 4.

### Description of Embodiments

Hereinafter, an embodiment of the present disclosure will be described in detail with reference to the drawings. A friction stir spot welding device provided with the friction stir spot welding tool according to the present disclosure can be applied to manufacture of various joined bodies obtained by overlapping two or more structural members such as a plate, a frame, an exterior member, or a columnar member of a thermoplastic resin molded body made from metal or resin or mixed with a fiber material, and performing spot welding. A joined body to be manufactured is a component of a structure such as an aircraft, a railway vehicle, or an automobile.

### [Configuration of Friction Stir Spot Welding Device]

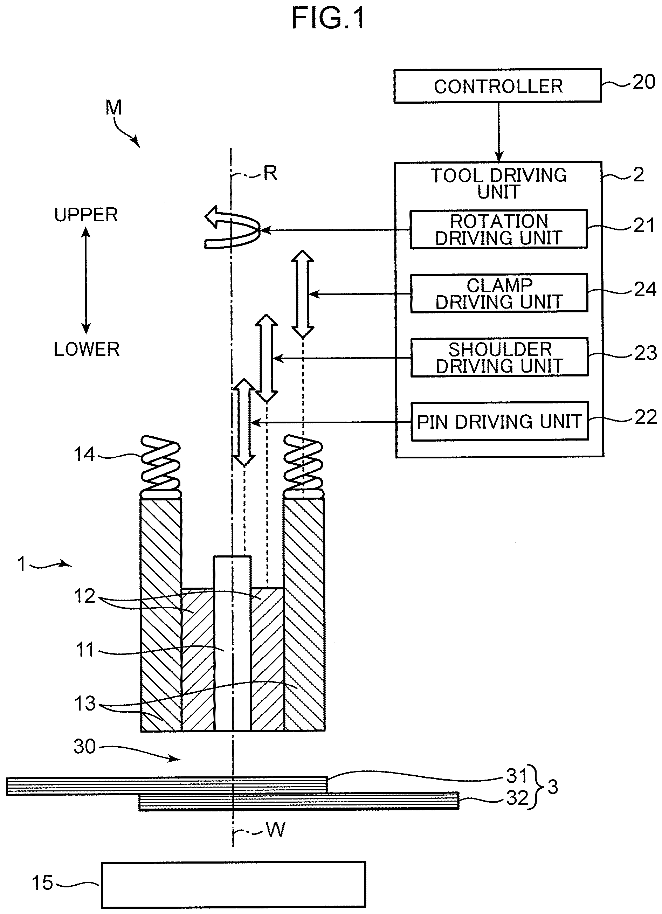

FIG. 1 is a schematic view illustrating a configuration of a friction stir spot welding device M according to an embodiment of the present disclosure. The friction stir spot welding device M includes a double-acting tool 1 for friction stir spot welding, a tool driving unit 2 that drives the tool 1 to rotate and move up and down, and a controller 20 that controls operation of each unit of the friction stir spot welding device M. Note that, in FIG. 1, directions "up" and "down" are indicated for convenience of description, and are not intended to limit an actual use direction of the tool 1.

The tool 1 is supported by various tool fixing portions. For example, the tool fixing portion is a tip portion of an articulated robot. A backup 15 is arranged facing a lower end surface of the tool 1. A joining object 3 is arranged between the tool 1 and the backup 15. The joining object 3 is formed by overlapping at least two members. FIG. 1 illustrates an example in which an overlapping portion 30 in which a part of a first member 31 including a flat plate and a part of a second member 32 similarly including a flat plate overlap each other in a vertical direction is arranged as the joining object 3 between the tool 1 and the backup 15.

The tool 1 includes a pin 11, a shoulder 12, a clamp 13, and a spring 14. The pin 11 is a cylindrical member, and is arranged such that its axis extends in the vertical direction. The pin 11 is rotatable about the axis as a rotation axis R, and is movable forward and backward in the vertical direction along the rotation axis R. Note that when the tool 1 is used, the rotation axis R and a spot welding position W in the overlapping portion 30 are aligned.

The shoulder 12 is a member formed in a cylindrical shape having a hollow portion through which the pin 11 is inserted. An axis of the shoulder 12 is coaxial with the axis of the pin 11, that is, the rotation axis R. The shoulder 12 can rotate about the rotation axis R and can move forward and backward in the vertical direction along the rotation axis R. The tool 1 of the present embodiment is a double-acting tool in which the pin 11 and the shoulder 12 move independently in an axial direction. That is, both the shoulder 12 and the pin 11 inserted into the hollow portion can relatively move in the rotation axis R direction while rotating about the rotation axis R. Specifically, the pin 11 and the shoulder 12 can not only move up and down simultaneously along the rotation axis R, but also independently move in a manner that one moves up and the other moves down.

The clamp 13 includes a hollow portion into which the shoulder 12 is inserted, and is a member formed in a cylindrical shape. An axis of the clamp 13 is also coaxial with the rotation axis R. The clamp 13 does not rotate about the axis, but moves up and down, that is, moves forward and backward in the vertical direction along the rotation axis R. The clamp 13 serves to surround an outer periphery of the pin 11 or the shoulder 12 when the pin 11 or the shoulder 12 performs friction stir. By surrounding of the clamp 13, a friction stir spot welding portion can be finished smoothly without scattering a friction stir material.

The spring 14 is attached to the upper end side of the clamp 13 and biases the clamp 13 downward toward the overlapping portion 30. The clamp 13 is attached to the tool fixing portion with the spring 14 interposed between them. The backup 15 includes a flat surface that abuts on the lower surface side of the overlapping portion 30 to be joined. The backup 15 is a backing member that supports the overlapping portion 30 when the pin 11 or the shoulder 12 is press-fitted into the overlapping portion 30. The clamp 13 biased by the spring 14 presses the overlapping portion 30 against the backup 15.

The tool driving unit 2 includes a rotation driving unit 21, a pin driving unit 22, a shoulder driving unit 23, and a clamp driving unit 24. The rotation driving unit 21 includes a motor, a driving gear, and the like, and rotatably drives the pin 11 and the shoulder 12 about the rotation axis R. The pin driving unit 22 is a mechanism that moves the pin 11 forward and backward along the rotation axis R. The pin driving unit 22 drives the pin 11 so that the pin 11 is press-fitted into the overlapping portion 30 and retracted from the overlapping portion 30. The shoulder driving unit 23 is a mechanism that moves the shoulder 12 forward and backward along the rotation axis R, and causes the shoulder 12 to be press-fitted into and retracted from the overlapping portion 30. The clamp driving unit 24 is a mechanism that moves the clamp 13 forward and backward along the rotation axis R. The clamp driving unit 24 moves the clamp 13 toward the overlapping portion 30 and presses the overlapping portion 30 against the backup 15. At this time, a biasing force of the spring 14 acts.

The controller 20 includes a microcomputer or the like, and executes a predetermined control program to control an operation of the tool driving unit 2. Specifically, the controller 20 controls the rotation driving unit 21 to perform a required rotation operation of the pin 11 and the shoulder 12. Further, the controller 20 controls the pin driving unit 22, the shoulder driving unit 23, and the clamp driving unit 24 to perform required forward and backward movement operations of the pin 11, the shoulder 12, and the clamp 13.

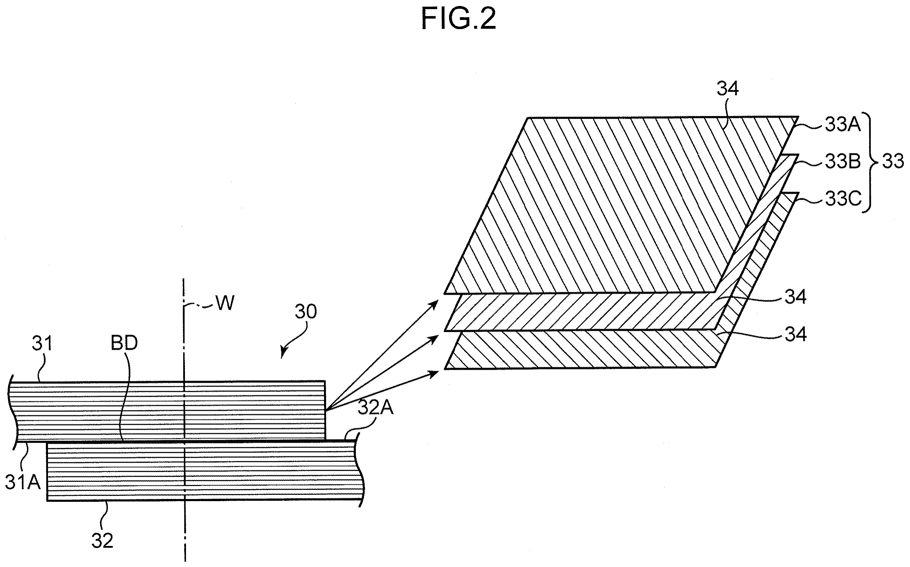

FIG. 2 is a view showing a configuration of a first member 31 and a second member 32 to be friction stir spot welded. Here, the overlapping portion 30 in which a part of the first member 31 having a plate shape and a part of the second member 32 having a plate shape are vertically overlapped with each other is illustrated. The overlapping portion 30 may be an overlapping portion between a plate and a frame or a columnar member, an overlapping portion between frames, or the like. In the overlapping portion 30, a mating surface BD in which a joining surface 31A as a lower surface of the first member 31 and a joining surface 32A as an upper surface of the second member 32 are in direct contact with each other is formed. One or more other plates may be interposed between the first member 31 and the second member 32.

FIG. 2 shows an example of using, as the first member 31 and the second member 32, a molded body obtained by laminating multiple layers of prepreg in which an array of continuous fibers is impregnated with thermoplastic resin. FIG. 2 illustrates a part of the sheet stacked body 33 constituting the first member 31. The sheet stacked body 33 includes a first sheet layer 33A, a second sheet layer 33B, and a third sheet layer 33C each made from a sheet in which an array of continuous fibers is impregnated with thermoplastic resin. The first sheet layer 33A is a sheet having a thickness of about 0.1 mm to 0.5 mm, in which a large number of continuous fibers 34 are arranged in a predetermined alignment direction, and the array of the continuous fibers 34 is impregnated with thermoplastic resin and integrated. The second sheet layer 33B and the third sheet layer 33C are also sheets similar to the above, but the alignment directions of the continuous fibers 34 are different from each other. The second member 32 is also a plate made from a multilayer laminate of sheets similar to the first member 31.

At the time of friction stir spot welding of the overlapping portion 30 by the tool 1, thermoplastic resin of an impregnation material is friction stirred while the continuous fibers 34 are cut by press fitting of the tool 1. Note that a prepreg molded body is an example of component of first member 31 and second member 32. For example, the overlapping portion 30 may be formed by using two or more metal plates made from an aluminum material or a steel material. As an example, the first member 31 on the side where the tool 1 is first press-fitted can be an aluminum alloy, and the second member 32 can be high tensile strength steel.

### [Method of Using Tool]

Next, a method of using the tool 1 exemplified in the present embodiment will be described. As a method of using the friction stir spot welding device M, there are roughly a pin preceding process in which the pin 11 of the tool 1 is first press-fitted into the overlapping portion 30 of the joining object 3 and a shoulder preceding process in which the shoulder 12 is first press-fitted into the overlapping portion 30. In this embodiment, the controller 20 drives the tool 1 to operate in the pin preceding process.

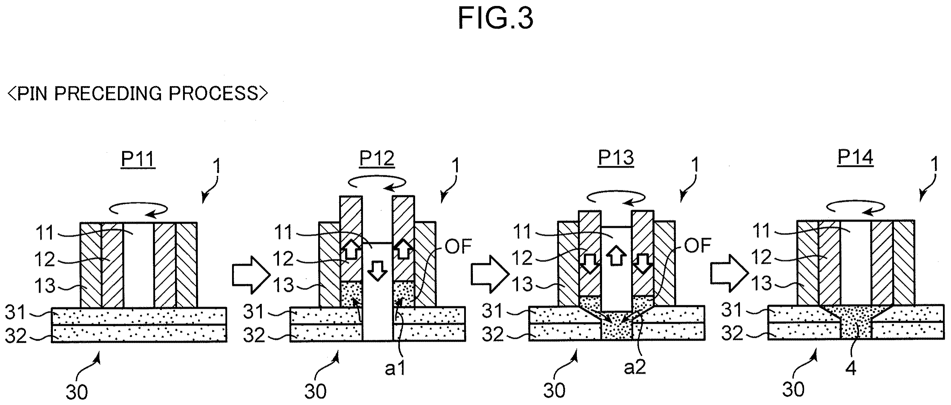

FIG. 3 is a diagram illustrating processes P11 to P14 of a friction stir spot welding method by the pin preceding process. Here, a case of friction stir spot welding of the overlapping portion 30 of the first member 31 and the second member 32 is schematically illustrated. The process P11 illustrates a pre-heating step of the overlapping portion 30. The pin 11 and the shoulder 12 are rotated at high speed around the axis at a predetermined rotation speed in a state where a lower end of the tool 1 abuts against a surface of the first member 31.

The process P12 illustrates a press-fitting step of the pin 11. As indicated by a white arrow in the diagram, the pin 11 is lowered while being rotated around the axis to be press-fitted into the overlapping portion 30, and the shoulder 12 is retracted upward. By this operation, a material of a press-fitting region of the pin 11 is stirred. Further, an overflow material OF that overflows from the overlapping portion 30 by the press fitting is released to an annular region between the pin 11 and the clamp 13 generated by retraction of the shoulder 12 (see an arrow a1).

The process P13 illustrates a backfilling step of the overflow material OF. In the backfilling step, while the pin 11 is moved up and retracted, the shoulder 12 is moved down. As the shoulder 12 moves down, as indicated by an arrow a2, a press-fitting region of the pin 11 is backfilled with the overflow material OF released to the annular region.

The process P14 illustrates a leveling step. In a state where lower end surfaces of the pin 11 and the shoulder 12 are returned to a height position of a surface of the first member 31, both are rotated to smooth a spot welding portion. Note that in a case where the first member 31 is made from thermoplastic resin, the pin 11 and the shoulder 12 are sometimes not rotated in the process P14, and a spot welding portion is sometimes simply pressed. By the above process, a stir welded portion 4 is formed, and the first member 31 and the second member 32 are spot welded at the overlapping portion 30.

### [Embodiment of Pin of Tool]

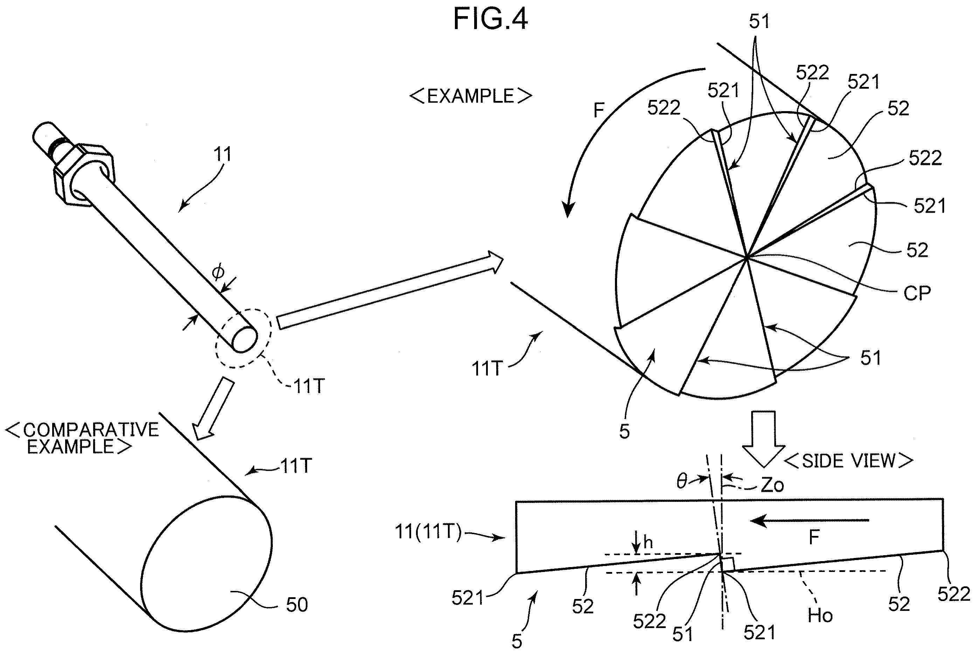

FIG. 4 is a perspective view and a side view showing shapes of the pin 11 and a tip portion 11T of the friction stir spot welding tool 1 according to an example of the present disclosure together with a comparative example. Conventionally, the tip portion 11T of the pin 11 has a shape having a circular tip surface 50 formed of a flat surface as shown in a section of <Comparative Example>. That is, the tip surface 50 is a flat surface without a step or the like. When the pin preceding process is executed using the tool 1 including the pin 11 having the tip surface 50, a high joining pressure may be required.

An example in which a high joining pressure is required is a case in which, in the joining object 3, at least the first member 31 is formed from thermoplastic resin prepreg reinforced with the continuous fibers 34, for example, the sheet stacked body 33 made from thermoplastic CFRP as illustrated in FIG. 2. In the case of the first member 31, the pin 11 is press-fitted while the continuous fibers 34 are cut at the time of friction stirring. In order to cut the continuous fibers 34, it is necessary to apply a large pressing force to the tool 1. According to an experiment conducted by the present discloser, it has been found that about 60% of the total pressing force applied to the tool 1 is used for cutting continuous fibers of a thermoplastic CFRP. Note that the remaining about 40% of the total pressing force is exclusively used to extrude the overflow material OF to the annular region on an outer periphery of the pin 11.

When a high joining pressure is required, a countermeasure against a reaction force to the joining pressure is required. For example, in a case where the tool 1 is mounted at a tip of a robot arm, it is necessary to set rigidity of the robot arm high so that bending deformation or the like does not occur due to the reaction force. In order to enhance the rigidity, it is necessary to increase size of the robot arm or employ a high strength arm material, and as a result, equipment of the friction stir spot welding device M including the tool 1 is increased in size and cost.

The tip portion 11T of the pin 11 according to the present disclosure has a shape of a tip surface 5 with which a joining pressure can be suppressed. As shown in the section <Example> in FIG. 4, the tip surface 5 having a circular shape as viewed in the axial direction is the same as that in a conventional technique, but the tip surface 5 is provided with a step-shaped portion 51 that forms a step in a rotation direction F of the pin 11. The step of the step-shaped portion 51 is a radial step extending in a radial direction from a center point CP of the circular tip surface 5 to an outer peripheral edge of the circle. A plurality of the step-shaped portions 51 are arranged in a circumferential direction of the tip surface 5. FIG. 4 illustrates an example in which eight radial steps are arranged at equal intervals in the circumferential direction of the tip surface 5.

The step-shaped portion 51 has a shape that is shallowest at a center point C of the tip surface 5 and deepest at an outer peripheral edge of the tip surface 5. That is, the step-shaped portion 51 has a shape in which a step height h gradually increases from the center point C toward the radially outer side of the tip surface 5. As a result of forming eight of the step-shaped portions 51 at equal intervals, eight sector surfaces 52 of the same size are arranged in the circumferential direction on the tip surface 5. The sector surfaces 52 are surfaces having an inclination corresponding to the step height h of the step-shaped portion 51.

Referring also to <Side view> in FIG. 4, the sector surface 52 has an inclination in which a front end 521 in the rotation direction F of the pin 11 is high and a rear end 522 is low. That the front end 521 is "high" means that, when the tip surface 5 is a lower end surface of the pin 11, the front end 521 protrudes downward more than the rear end 522. A line Ho added to <Side view> is a horizontal line orthogonal to an axis of the pin 11. The sector surface 52 has an inclination determined by the step height h with respect to the line Ho. The step height h is maximized at a position of an outer peripheral edge of the tip surface 5. A height of the front end 521 and a height of the center point CP are the same. On the other hand, a height of the rear end 522 is the same as the center point CP at a position of the center point CP, but is low by the maximum step height h at a position of an outer peripheral edge of the tip surface 5.

As can be seen from the shape characteristic as described above, the center point CP of the tip surface 5 does not protrude downward. That is, although the step-shaped portion 51 is formed, flatness is ensured on the tip surface 5 in a macroscopic view. This is because, as described above, in the process P14 of FIG. 3, there is a step of pressing the tip surface 5 of the pin 11 against a surface of the stir welded portion 4 to finish the surface, and it is considered that the shape of the tip surface 5 is transferred to the surface of the stir welded portion 4 in this step. That is, when there is a remarkable protruding portion on the tip surface 5, a recessed portion corresponding to the protruding portion is formed on the surface of the stir welded portion 4, by which flatness of the joining object 3 cannot be ensured. In order to avoid this, there is desirably no remarkable protruding portion on the tip surface 5.

The step-shaped portion 51 has a stepped surface based on a height difference between the front end 521 and the rear end 522 of a pair of the sector surfaces 52 adjacent in the circumferential direction. The stepped surface is a surface extending in a direction orthogonal to the rotation direction F. The stepped surface and a right-angled edge of the front end 521 form to have a blade shape, and serve to scrape a joining object. Such a blade improves stirring property of a joining object and extrudability of a stirring material outward in a radial direction, and also contributes to cutting of the continuous fibers 34 described above.

The step height h of the step-shaped portion 51 may be appropriately set, but if the step height h is too high, press-fitting resistance is increased, and if the step height h is too low, an effect as a "blade" is reduced. The step height h can be determined based on a diameter φ of the pin 11. For example, the step height h can be set such that a maximum height difference of a step between the front end 521 and the rear end 522 is in a range of 1% to 10%, preferably in a range of 1.5% to 7% of the diameter φ of the pin 11.

The stepped surface of the step-shaped portion 51 may be a vertical surface parallel to an axis Zo of the pin 11, but may be a surface having an inclination angle θ with respect to the axis Zo as illustrated in FIG. 4. The stepped surface of the step-shaped portion 51 in the illustrated example is a surface intersecting the sector surface 52 inclined with respect to the line Ho at a right angle. The inclination angle θ can be selected, for example, from a range of 2 degrees to 7 degrees.

### [Press Fitting Test Example]

### <Test 1>

Using the tool 1 having the tip surface 5 according to <Example> in FIG. 4 and the tool 1 having the tip surface 50 according to <Comparative Example> at the tip portion 11T of the pin 11, a pressing force required to achieve the same pin press-fitting amount to the same test piece was investigated. As a test piece of the joining object 3, the overlapping portion 30 in which two thermoplastic CFRP resin sheets having a thickness of 2.5 mm were overlapped was prepared. In both the example and the comparative example, the pin 11 having the diameter φ of 9 mm was used. The maximum height difference of the step height h of the step-shaped portion 51 included in the tip surface 5 of the example was 0.28 mm, and the inclination angle θ of the stepped surface was 5 degrees. The tip surface 50 of the comparative example is a flat horizontal surface.

A press-fitting target value of the pin 11 was set to 3.87 mm, and the pin 11 was press-fitted into the overlapping portion 30 by the tool 1 of each of the example and the comparative example. In both the example and the comparative example, it was possible to press fit the pin 11 to achieve the press-fitting target value. However, a pressing force required to achieve the press-fitting target value is
Example = 4 [kN], Comparative Example = 9 [kN],
and it was confirmed that the tool 1 of the example may perform friction stir spot welding of the overlapping portion 30 with a significantly lower pressing force than that of the comparative example.

### <Test 2>

Using the tool 1 having the tip surface 5 of the same example as in Test 1 and the tool 1 having the tip surface 50 of the comparative example, a test of press fitting the pin 11 into the same metal sample with the same pressing force was performed. As the metal sample, a sample having a thickness of 1 mm, obtained by subjecting an A7075 aluminum alloy prescribed in JIS-H-4040 to T6 treatment, was used. The pin 11 of the tool 1 of each of the example and the comparative examples was press-fitted into the metal sample with a press-fitting target value of the pin 11 into the sample set to 0.5 mm and a pressing force set to 5.5 kN.

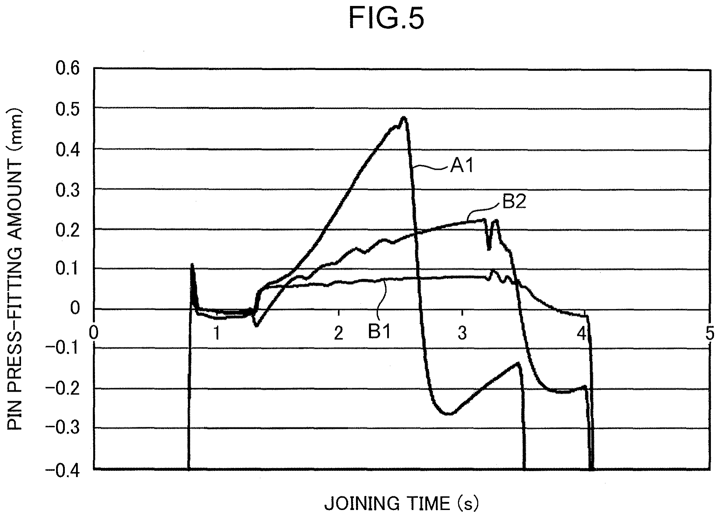

FIG. 5 is a graph showing a relationship between a press-fitting amount (mm) of the pin 11 into the metal sample and joining time (seconds) in the example and the comparative examples. A characteristic A1 indicates a press-fitting behavior of the pin 11 by the tool 1 of the example. It is found that press fitting at a press-fitting target value is completed in about 2.5 seconds from start of the press fitting of the pin 11 into the metal sample. On the other hand, a characteristic B1 indicates a press-fitting behavior of the pin 11 by the tool 1 of the comparative example. As a result, it was not possible to perform press fitting of the pin 11 that achieves the press-fitting target value at a set pressing force = 5.5 kN. A characteristic B2 indicates a press-fitting behavior when the tool 1 of the comparative example is given a pressing force = 8.7 kN that can be set by the test apparatus used to execute Test 2 and the pin 11 is press-fitted into the metal sample. In the tool 1 of the comparative example, as indicated by the characteristic B2, only press-fitting of about 0.2 mm was performed even when a pressing force increased by about 60% of the set pressing force was applied, and the press-fitting target value was not achieved.

### <Test 3>

Using the overlapping portion 30 formed of the thermoplastic CFRP resin sheet used in Test 1 and the tool 1 having the tip surface 5 of the example, a relationship between a pin press-fitting amount and joining time was examined. In Test 1, it could be confirmed that the press-fitting target value = 3.87 mm could be achieved with the pressing force = 4 kN of the tool 1, but it was examined whether or not press fitting was possible by further reducing a pressing force.

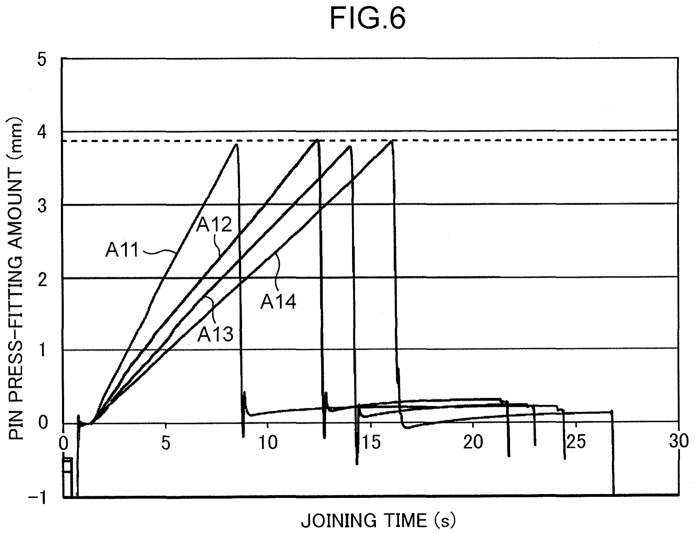

FIG. 6 is a graph showing a relationship between a pin press-fitting amount (mm) and joining time (seconds) when the tool 1 of the embodiment is press-fitted into the overlapping portion 30 by changing a pressing force applied to the tool 1. Characteristics A11, A12, A13, and A14 shown in the graph show press-fitting behaviors when the pressing force = 4 kN, 3.5 kN, 3 kN, and 2 kN, respectively. As can be seen from this graph, it was confirmed that the press-fitting target value could be achieved even if the pressing force is reduced to 2 kN, if a press-fitting speed of the pin 11 is decreased and, as a result, the joining time is increased. In the tool 1 of the comparative example, no matter how much a press-fitting speed of the pin 11 is decreased, the press-fitting target value could not be achieved with the pressing force at the 4kN level.

From Tests 1 to 3 above, it has been confirmed that the step-shaped portion 51 contributes to reduction of the joining pressure when a joining object is joined by press-fitting the pin 11 by the pin preceding process. In the pin preceding process of press-fitting the pin 11 while retracting the shoulder 12, as described in process P12 of FIG. 3, a material immediately below the pin 11 is stirred and fluidized, and extruded to an annular space generated by shoulder retraction existing at an outer periphery of the pin 11. The step-shaped portion 51 of the tip surface 5 of the pin 11 forms a step in the rotation direction F of the pin 11. For this reason, when the pin 11 is press-fitted into the joining object 3 while being rotated about the axis, the step-shaped portion 51 actively scrapes a material immediately below the pin 11. Even when the joining object 3 is the sheet stacked body 33 as exemplified in FIG. 2, the step-shaped portion 51 serves as a blade to cut the continuous fibers 34, so that the joining pressure can be reduced.

Furthermore, the step-shaped portion 51 also contributes to active extrusion of a material scraped immediately below the pin 11 into a shoulder retraction space. That is, the step-shaped portion 51 has a stepped surface extending in a direction orthogonal to the rotation direction F of the pin 11, that is, in the radial direction. As the pin 11 rotates, the stepped surface serves a function of extruding a stirred material radially outward. This function cannot be achieved by the pin 11 of the comparative example having only the flat tip surface 50. When used in the pin 11 of the example having the function of actively scraping a material by the step-shaped portion 51 and extruding a stirring material, the stirring of a material immediately below the pin 11 and flow of a stirred material toward the radial outside of the pin 11 are smooth. Therefore, it is possible to reduce a pressing force of the pin 11 with respect to the joining object 3 at the time of friction stir spot welding, that is, a joining pressure to be applied to the tool 1.

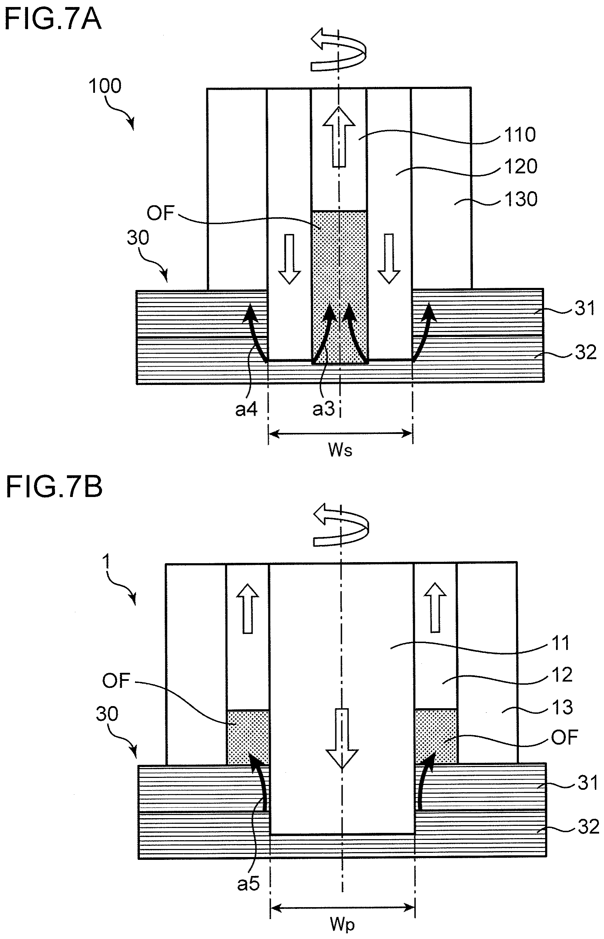

Based on the above confirmation result, it is conceivable to employ the shoulder preceding process instead of the pin preceding process and to provide a step-shaped portion in accordance with the step-shaped portion 51 of the present embodiment on a tip surface of the shoulder 12. However, employing the pin preceding process and providing the step-shaped portion 51 on the tip surface 5 of the pin 11 have more advantages than the shoulder preceding process. This point will be described with reference to FIG. 7.

FIG. 7A is a diagram showing behavior of a stirred material in the shoulder preceding process, and FIG. 7B is a diagram showing behavior of a stirred material in the pin preceding process. In a tool 100 employing the shoulder preceding process, as indicated by an arrow a3, it is assumed that the overflow material OF is released into a space in a shoulder 120 generated as a pin 110 moves up. However, in a case where a step-shaped portion is provided on a tip surface of the shoulder 120, and flow of a stirred material increases, there is no relief space of the overflow material OF, and as indicated by an arrow a4, a flow of a material flowing out to the radial outside of the shoulder 120 below a clamp 130 may be generated. With such outflow of a material, a depression is more likely to occur in a friction stir spot welding portion. On the other hand, in the pin preceding process, as indicated by an arrow a5, the overflow material OF is originally set to overflow radially outward of the pin 11 and be released. Therefore, even if flow of a stirred material is increased by provision of the step-shaped portion 51, the overflow material OF is likely to return into a stirring range, and no depression occurs in a friction stir spot welding portion.

Further, when a joint diameter Ws by the shoulder preceding process and a joint diameter Wp by the pin preceding process are the same, volume of the overflow material OF is larger in the pin preceding process. For example, in a case where the diameter φ of the pin 11 is 9 mm, the overflow material OF when employing the pin preceding process is 1.8 times as much as that of the shoulder preceding process. As described above, in the pin preceding process in which a material to be extruded at the time of stirring increases, it can be said that significance of increasing an extrusion force by forming the step-shaped portion 51 on the tip surface 5 of the pin 11 is greater than that in the shoulder preceding process.

### [Another Example of Pin Tip Shape]

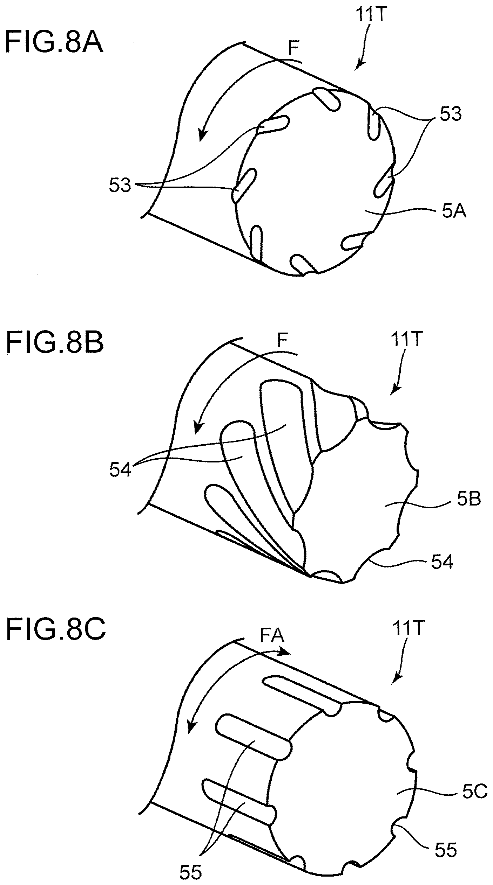

FIGS. 8A to 8C are perspective views showing another example of a shape of the tip portion 11T of the pin 11 of the friction stir spot welding tool 1. FIGS. 8A to 8C illustrate an example in which a step of the step-shaped portion is a step formed by cutting out a part of the outer peripheral edge of pin tip surfaces 5A, 5B, and 5C. These steps are formed by a groove-shaped notch.

A plurality of oblique grooves 53 are formed in the tip surface 5A of the tip portion 11T illustrated in FIG. 8A. The oblique groove 53 is a recessed groove formed in the tip surface 5A, and linearly extends radially inward of the tip surface 5A from an outer peripheral edge of the tip surface 5A. The oblique groove 53 is a groove having an inclination in a direction approaching an outer peripheral edge with respect to an imaginary line corresponding to a diameter of the tip surface 5A having a circular shape. The inclination is an inclination that directs the oblique groove 53 in a direction following the rotation direction F of the pin 11. Due to the formation of the oblique groove 53, a stepped shape exists in the vicinity of an outer peripheral edge of the tip surface 5A. FIG. 8A illustrates an example in which eight of the oblique grooves 53 having a short length are arranged at equal intervals along an outer peripheral edge of the tip surface 5A. A length, radius, depth, arrangement pitch, inclination, and the like of the oblique grooves 53 can be appropriately changed.

A plurality of spiral grooves 54 extending in an axial direction of the pin 11 starting from the tip surface 5B are formed in the tip portion 11T illustrated in FIG. 8B. The spiral groove 54 is a recessed groove formed in a side peripheral surface of the tip portion 11T, and extends spirally from an outer peripheral edge of the tip surface 5B toward the upstream side in the rotation direction F. In the vicinity of an outer peripheral edge of the tip surface 5B, a stepped shape is formed by a notch inward in the radial direction accompanying formation of the spiral groove 54. The spiral groove 54 of FIG. 8B is an example, and a length, a radius, a depth, an arrangement pitch, a spiral angle, and the like of the spiral groove 54 can be appropriately changed.

An axial groove 55 linearly extending in an axial direction of the pin 11 starting from the tip surface 5C is formed in the tip portion 11T illustrated in FIG. 8C. The axial groove 55 is a recessed groove formed in a side peripheral surface of the tip portion 11T, and extends in the axial direction of the pin 11 by a predetermined length from an outer peripheral edge of the tip surface 5B. In the pin 11 having the tip portion 11T having the axial groove 55, both the clockwise direction and the counterclockwise direction can be set to a rotation direction FA. In the vicinity of an outer peripheral edge of the tip surface 5C, a stepped shape is formed by a notch inward in the radial direction accompanying formation of the axial groove 55. The axial groove 55 in FIG. 8C is an example, and a length, radius, depth, arrangement pitch, and the like of the axial groove 55 can be appropriately changed.

As exemplified above, by forming the oblique groove 53, the spiral groove 54, and the axial groove 55, it is possible to form a step obtained by cutting out a part of an outer peripheral edge of a pin tip surface. Even by the step, it is possible to promote scraping of a material immediately below the pin 11 and extrusion of the material into a shoulder retraction space, and it is possible to reduce a joining pressure of the tool 1.

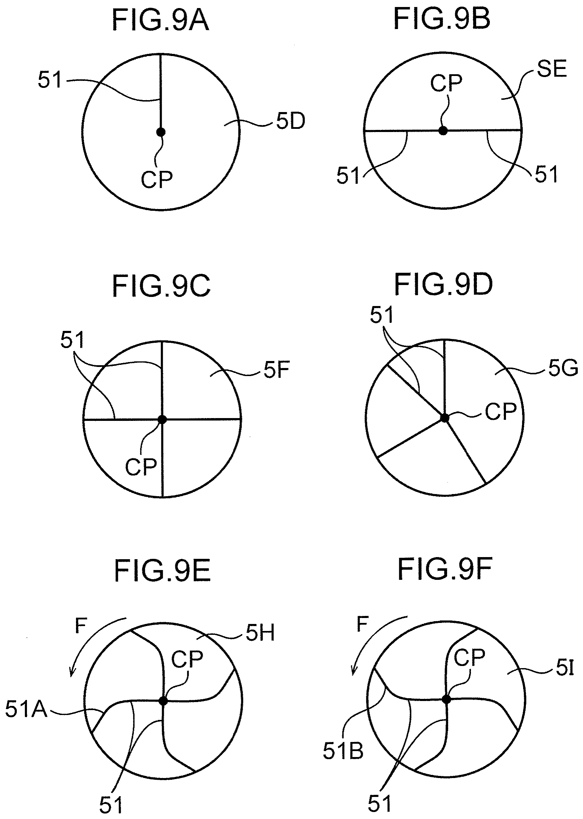

FIGS. 9A to 9F illustrate various modifications in a case where the step-shaped portion 51 illustrated in FIG. 4 is formed on a tip surface of the pin 11. FIG. 9A illustrates a tip surface 5D including only one of the step-shaped portions 51. Similarly to the example of FIG. 4, the step-shaped portion 51 linearly extends from the center point C toward an outer peripheral edge of the tip surface 5D, and has a shape in which a step height gradually increases toward the radial outside.

FIG. 9B shows a tip surface 5E including two of the step-shaped portions 51. Two of the step-shaped portions 51 are linearly arranged with the center point C interposed between them. As a result, there are two semicircular surfaces on the tip surface 5E. These semicircular surfaces are surfaces having an inclination corresponding to a step of the step-shaped portion 51. FIG. 9C illustrates a tip surface 5F including four of the step-shaped portions 51. Four of the step-shaped portions 51 are arranged at equal intervals of 90 degrees in a circumferential direction. On the tip surface 5F, four sector surfaces of the same size are arranged in the circumferential direction. FIG. 9D illustrates a tip surface 5G in which four of the step-shaped portions 51 are arranged at random intervals in a circumferential direction. As in the example of FIG. 9D, the step-shaped portions 51 do not need to be arranged at equal intervals in the circumferential direction.

FIG. 9E illustrates a tip surface 5H including four of the step-shaped portions 51 having a curved portion 51A. In the above example, the step-shaped portion 51 linearly extending in the radial direction is exemplified, but the curved portion 51A may be provided as in the example of FIG. 9E. The curved portion 51A is a portion obtained by curving the step-shaped portion 51 in the vicinity of an outer peripheral edge of the tip surface 5H so as to follow the rotation direction F. FIG. 9F also illustrates a tip surface 51 including four of the step-shaped portions 51 having a curved portion 51B. Here, the curved portion 51B is a portion obtained by curving the step-shaped portion 51 in the vicinity of an outer peripheral edge of the tip surface 5H in a direction opposite to the rotation direction F. By providing the pin 11 with the tip surfaces 5D to 51 described above, a joining pressure of the tool 1 can also be reduced.

### [Summary of Present Disclosure]

The specific embodiment described above includes disclosure having a configuration below.

A friction stir spot welding tool according to a first aspect of the present disclosure includes: a cylindrical pin that rotates about an axis; a shoulder having a hollow portion into which the pin is inserted; and a driving unit that performs driving of press-fitting the pin into a joining object while rotating the pin and driving of retracting the shoulder with respect to the joining object, in which a step-shaped portion forming a step in a rotation direction of the pin is provided on at least a part of a circular tip surface of the pin.

According to the first aspect, when a joining object is joined by press-fitting the pin, the step-shaped portion contributes to reduction of a joining pressure. That is, in the pin preceding process of press-fitting the pin and retracting the shoulder, a material immediately below the pin is extruded to a shoulder retraction space existing in an outer periphery of the pin. The step-shaped portion forms a step in a rotation direction of the pin. For this reason, when the pin is press-fitted into a joining object while being rotated about an axis, the step-shaped portion exhibits a behavior of extruding a material immediately below the pin into the shoulder retraction space while actively scraping the material. For this reason, stirring of a material immediately below the pin and flow of a stirred material toward the radially outer side of the pin become smooth. Therefore, it is possible to reduce a pressing force of the pin with respect to a joining object at the time of friction stir spot welding, that is, a joining pressure to be applied to a tool. Since a reaction force can also be suppressed by reduction of a joining pressure, a friction stir spot welding tool can be mounted on a small robot or a small dedicated device. By this, it is possible to avoid increase in size and cost of equipment including the friction stir spot welding tool.

A friction stir spot welding tool according to a second aspect is the tool of the first aspect, in which the step of the step-shaped portion is a radial step extending in a radial direction from a center point of the tip surface to an outer peripheral edge.

According to the second aspect, since the step is a radial step, a material can be efficiently extruded in a pin outer peripheral direction at the time of stirring by press-fitting the pin.

A friction stir spot welding tool according to a third aspect is the tool according to the second aspect, in which a plurality of the radial steps are arranged in a circumferential direction of the tip surface of the pin.

According to the third aspect, since a plurality of the radial steps are arranged in the circumferential direction, a force of extruding a material in a pin outer peripheral direction can be further increased, and the pressing force of the pin can be further reduced.

A friction stir spot welding tool according to a fourth aspect is the tool according to the third aspect, in which the plurality of radial steps are arranged at equal intervals in a circumferential direction of the tip surface.

According to the fourth aspect, since the plurality of radial steps are arranged at equal intervals, it is possible to perform scraping of a material immediately below the pin and extrusion of the material in the pin outer peripheral direction in a well-balanced manner.

A friction stir spot welding tool according to a fifth aspect is the tool of the first to fourth aspects, in which a maximum height difference of the step of the step-shaped portion is set in a range of 1% to 10% of a diameter of the pin.

According to the fifth aspect, a step height of the step-shaped portion can be optimized.

A friction stir spot welding tool according to a sixth aspect is the tool of the first aspect, in which the step of the step-shaped portion is a step formed by cutting out a part of an outer peripheral edge of the tip surface.

According to the sixth aspect, it is possible to promote scraping of a material immediately below the pin and extrusion of the material into a shoulder retraction space even with a step by a notch of a part of an outer peripheral edge, and it is possible to reduce a joining pressure of the tool.

### Description for Reference Signs

- 1: tool (friction stir spot welding tool)
- 11: pin
- 12: shoulder
- 13: clamp
- 2: tool driving unit (driving unit)
- 3: joined body 3
- 4: stir welded portion
- 5, 5A to 51: tip surface
- 51: step-shaped portion
- 53: oblique groove (step-shaped portion)
- 54: spiral groove (step-shaped portion)
- 55: axial groove (step-shaped portion)
- F: rotation direction
- M: friction stir spot welding device
- R: rotation axis (axis)

## Claims

1. A friction stir spot welding tool, comprising:
a cylindrical pin that rotates about an axis;
a shoulder having a hollow portion into which the pin is inserted; and
a driving unit that performs driving of press-fitting the pin into a joining object while rotating the pin and driving of retracting the shoulder with respect to the joining object, wherein
a step-shaped portion forming a step in a rotation direction of the pin is provided on at least a part of a tip surface of the pin.

2. The friction stir spot welding tool according to claim 1, wherein the step of the step-shaped portion is a radial step extending in a radial direction from a center point of the tip surface to an outer peripheral edge.

3. The friction stir spot welding tool according to claim 2, wherein a plurality of the radial steps are arranged in a circumferential direction of the tip surface of the pin.

4. The friction stir spot welding tool according to claim 3, wherein the plurality of radial steps are arranged at equal intervals in a circumferential direction of the tip surface.

5. The friction stir spot welding tool according to any one of claims 1 to 4,
wherein a maximum height difference of the step of the step-shaped portion is set in a range of 1% to 10% of a diameter of the pin.

6. The friction stir spot welding tool according to claim 1, wherein the step of the step-shaped portion is a step formed by cutting out a part of an outer peripheral edge of the tip surface.
